# EUROPEAN PATENT APPLICATION

(11) **EP 3 517 304 A1**
(43) Date of publication of application: **31.07.2019**
(21) Application number: 19154282.8
(22) Date of filing: 29.01.2019
(51) Int. Cl.: B41J 2/175, B01D 19/00, B41J 2/19

(54) **FLOW PATH MEMBER AND LIQUID EJECTING APPARATUS**

(30) Priority: 29.01.2018 JP 2018012238
(71) Applicant: Seiko Epson Corporation, Tokyo 160-8801 (JP)
(72) Inventor: NAKAJIMA, Yoshinori, Suwa-shi, Nagano 392-8502 (JP)
(74) Representative: Miller Sturt Kenyon

(57) **Abstract**

A flow path member includes a first flow path for distributing liquid, and a filter section disposed in the first flow path to extend intersecting with a horizontal direction, the filter section being provided for capturing an air bubble. The filter section has a plurality of filters including a first filter disposed on a most upstream side, and a second filter disposed on a downstream side relative to the first filter and having filtration performance higher than the first filter.

## Description

The entire disclosure of Japanese Patent Application No. 2018-012238, filed January 29, 2018 is expressly incorporated by reference herein.

### BACKGROUND

### 1. Technical Field

The present invention relates to a flow path member and a liquid ejecting apparatus.

### 2. Related Art

For example, JP-A-2017-136822 discloses a liquid ejecting apparatus having a flow path member in which a filter is disposed extending in a vertical direction in an inner flow path for distributing liquid so as to capture air bubbles and foreign substances contained in the liquid.

However, when a filter is disposed extending in the vertical direction in the flow path member, as the level of liquid which is in contact with the upstream side of the filter varies, an air bubble may remain in the openings of the filter, causing passage of the air bubble through the filter. Air bubbles, which have passed through the filter and flowed to the nozzle, may cause failure in ejection of liquid via the nozzle. Accordingly, there is a demand for flow path members having a filter that does not easily allow passage of air bubbles.

### SUMMARY

An advantage of some aspects of the invention can be implemented as follows.
(1) According to an aspect of the invention, a flow path member is provided. The flow path member includes a first flow path for distributing liquid, and a filter section disposed in the first flow path to extend intersecting with a horizontal direction, the filter section being provided for capturing an air bubble. The filter section has a plurality of filters including a first filter disposed on a most upstream side, and a second filter disposed on a downstream side relative to the first filter and having filtration performance higher than the first filter. According to the flow path member of this aspect, even if small air bubbles are generated in the openings of the first filter, the air bubbles are limited in size and not allowed to pass through the second filter. Accordingly, passage of air bubbles through the filter section can be reduced.
(2) According to an aspect of the invention, the first filter may have regularly arranged filter openings, and the second filter may have irregularly arranged filter openings. According to the flow path member of this aspect, since the openings of the respective filters tend to be misaligned from each other, passage of air bubbles through the filter section can be further reduced.
(3) According to an aspect of the invention, the first filter and the second filter may each have regularly arranged filter openings. According to the flow path member of this aspect, filtration performance of the first filter and the second filter can be easily adjusted.
(4) According to an aspect of the invention, a opening pitch of the first filter may be different from multiples of a opening pitch of the second filter. According to the flow path member of this aspect, the openings of the respective filters can be misaligned from each other, and passage of air bubbles through the filter section can be further reduced.
(5) According to an aspect of the invention, the first filter may have liquid repellency higher than the second filter. According to the flow path member of this aspect, compared with the case where the second filter has liquid repellency higher than the first filter, the filter section can have reduced flow path resistance and can reduce formation of meniscus that may cause occurrence of small air bubbles in the openings of the second filter.
(6) According to an aspect of the invention, the first flow path may have a groove-shaped recess on an inner peripheral surface of the first flow path, and the filter section may be supported when an outer peripheral edge of the filter section is fitted in the recess. According to the flow path member of this aspect, the filter section can be fixed in the first flow path while ensuring an effective cross-section of the filter.
(7) According to an aspect of the invention, an elastic member along with the outer peripheral edge may be fitted in the recess. According to the flow path member of this aspect, since the outer peripheral edge of the filter section is supported by the elastic member, sealing ability of the outer peripheral edge of the filter section can be improved.
(8) According to an aspect of the invention, the plurality of filters may be in close contact with each other. According to the flow path member of this aspect, gaps between filters may also serve as filter openings to further reduce passage of air bubbles through the filter section.
(9) According to an aspect of the invention, the filter section may be inclined relative to the horizontal direction, and the first filter may be disposed on an upper side in a gravity direction relative to the second filter. According to the flow path member of this aspect, an air bubble attached on the first filter can be efficiently released upward in the gravity direction.
(10) According to an aspect of the invention, the first flow path may have an opening disposed on an upper side in the gravity direction and on an upstream side relative to the filter section, and the opening may be provided with a gas permeable film. According to the flow path member of this aspect, air bubbles captured by the filter section can be released to the outside of the first flow path via the gas permeable film.
(11) According to another aspect of the invention, a liquid ejecting apparatus is provided. The liquid ejecting apparatus includes a nozzle for ejecting liquid supplied from a liquid supply source, a first flow path for distributing the liquid supplied from the liquid supply source to the nozzle, and a filter section disposed in the first flow path to extend intersecting with a horizontal direction, the filter section being provided for capturing an air bubble. The filter section has a plurality of filters including a first filter disposed on a most upstream side, and a second filter disposed on a downstream side relative to the first filter and having filtration performance higher than the first filter. According to the liquid ejecting apparatus of this aspect, flow of air bubbles to the downstream side relative to the filter section can be reduced. Accordingly, occurrence of ejection failure in the nozzle due to an air bubble flowing to the nozzle can be reduced.
(12) According to an aspect of the invention, the liquid ejecting apparatus may further include a pressurization unit disposed in the first flow path on an upstream side relative to the filter section, the pressurization unit being provided for pressurizing and supplying the liquid.

According to the liquid ejecting apparatus of this aspect, flow of air bubbles to the nozzle can be reduced by the filter section even if an air bubble shrinks or expands when pressurization and supply are turned on or off from the upstream side relative to the filter section.

The invention can be implemented in various forms other than the flow path member described above. For example, the invention can be implemented in the forms such as liquid ejecting apparatuses, liquid ejection units, and air bubble removing filters.

### BRIEF DESCRIPTION OF THE DRAWINGS

Embodiments of the invention will now be described by way of example only with reference to the accompanying drawings, wherein like numbers reference like elements.
Fig. 1 is an explanatory view illustrating a schematic configuration of a liquid ejecting apparatus according to a first embodiment.
Fig. 2 is an explanatory view illustrating a configuration of a filter chamber according to the first embodiment.
Fig. 3 is a first explanatory view illustrating behavior of air bubbles captured by a filter section.
Fig. 4 is a second explanatory view illustrating behavior of air bubbles captured by a filter section.
Fig. 5 is a third explanatory view illustrating behavior of air bubbles captured by a filter section.
Fig. 6 is a fourth explanatory view illustrating behavior of air bubbles captured by a filter section.

### DESCRIPTION OF EXEMPLARY EMBODIMENTS

### A. First Embodiment

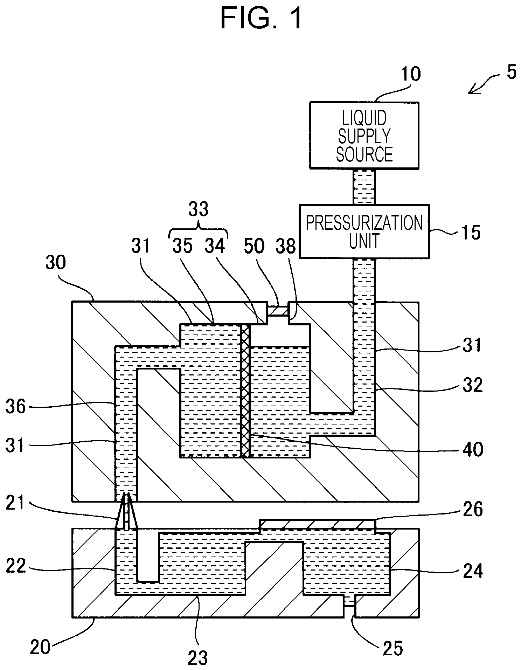

Fig. 1 is an explanatory view illustrating a schematic configuration of a liquid ejecting apparatus 5 according to a first embodiment. The liquid ejecting apparatus 5 of the present embodiment is configured as an ink jet printer which includes a liquid ejecting head 20 having a nozzle 25 for ejecting ink (liquid) supplied from a liquid supply source 10, and a flow path member 30 which is connected between the liquid supply source 10 and the liquid ejecting head 20 so that ink supplied from the liquid supply source 10 is fed into the liquid ejecting head 20. The flow path member 30 is detachably attached to the liquid ejecting head 20. The liquid ejecting head 20 and the flow path member 30 are also collectively referred to as a "liquid ejecting unit".

The liquid supply source 10 is a supply source of ink. The liquid supply source 10 of the present embodiment is an ink cartridge that is detachably attached to the liquid ejecting apparatus 5. The ink may be pigment ink or dye ink. The liquid ejecting apparatus 5 may be an off-carriage type printer in which the liquid supply source 10 is not provided on the liquid ejecting head 20, or may be an on-carriage type printer in which the liquid supply source 10 is provided on the liquid ejecting head 20. The liquid ejecting apparatus 5 includes a pressurization unit 15 that suctions ink from the ink cartridge for pressure supply of the ink. The pressurization unit 15 may be, for example, a pump. Further, the liquid ejecting apparatus 5 may not necessarily include the pressurization unit 15. In this case, ink is supplied from the liquid supply source 10, for example, by a water head difference. Further, although the liquid supply source 10 in the present embodiment is detachably attached to the liquid ejecting apparatus 5, the liquid supply source 10 may be a tank fixedly attached to the liquid ejecting apparatus 5. In this case, a tank is refilled with ink as appropriate from a bottle which stores ink.

The liquid ejecting head 20 includes a supply needle 21, a head flow path 22, a reservoir 23, a pressure chamber 24, and the nozzle 25 such that ink flows therethrough in this order. The supply needle 21 is inserted into a first flow path 31 of the flow path member 30 so that ink is introduced from the first flow path 31 into the head flow path 22. A gap between the supply needle 21 and the first flow path 31 is sealed to prevent ink from leaking. Alternatively, instead of providing the supply needle 21, a filter disposed in the flow path member 30 and a filter disposed in the liquid ejecting head 20 may be brought into contact with each other to thereby ensure a flow of ink. The ink introduced into the head flow path 22 flows into the reservoir 23. The reservoir 23 communicates with the pressure chamber 24 so as to temporarily store ink to be supplied to the pressure chamber 24.

The pressure chamber 24 communicates with the nozzle 25. Further, a piezo actuator 26 is provided in the pressure chamber 24. When the volume of the pressure chamber 24 is decreased by actuating the piezo actuator 26 and the pressure in the pressure chamber 24 exceeds a meniscus withstanding pressure of ink in the nozzle 25, ink is ejected from the nozzle 25. On the other hand, when the volume of the pressure chamber 24 is increased by actuating the piezo actuator 26 and the pressure in the pressure chamber 24 becomes negative, ink is supplied from the reservoir 23. At this time, since the pressure of the reservoir 23 also decreases, ink is supplied from the head flow path 22 into the reservoir 23. Further, the liquid ejecting head 20 is not limited to the above piezo type, and may be, for example, a thermal type.

The flow path member 30 includes the first flow path 31 and a filter section 40. The first flow path 31 is a flow path for ink first. The filter section 40 is a filter for capturing an air bubble or foreign substance contained in ink. The first flow path 31 includes, from an upstream side, an upstream first flow path 32, a filter chamber 33, and a downstream first flow path 36 such that ink flows therethrough in this order. The filter section 40 is disposed in the filter chamber 33. The filter chamber 33 includes an upstream filter chamber 34 and a downstream filter chamber 35 separated by the filter section 40. In the present embodiment, ink flows from the upstream filter chamber 34 to the downstream filter chamber 35 in the horizontal direction. Further, an opening 38 is provided in the upper part of the upstream filter chamber 34 in the gravity direction, and a gas permeable film 50 is provided in the opening 38. The gas permeable film 50 is a film that allows permeation of gas such as air but does not allow permeation of liquid such as ink, and is configured to release air stored in the upstream filter chamber 34 to the outside of the upstream filter chamber 34. Further, the opening 38 and the gas permeable film 50 may also be provided in the upper part of the downstream filter chamber 35 in the gravity direction.

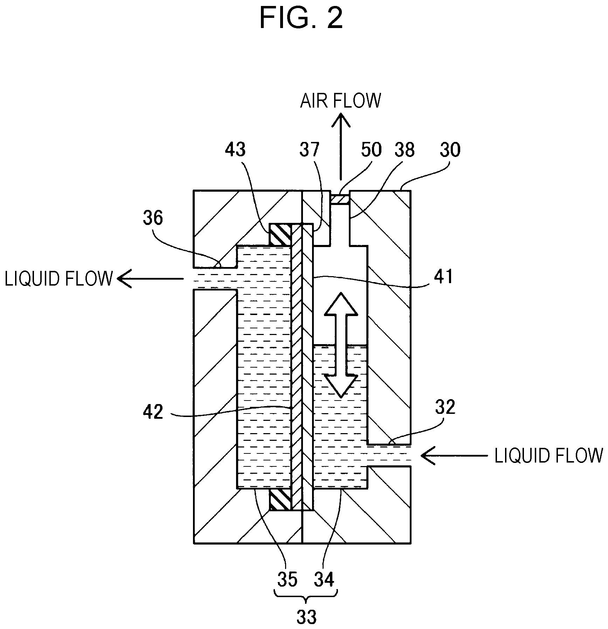

Fig. 2 is an explanatory view illustrating a configuration of the filter chamber 33 in further detail. The filter section 40 includes a plurality of filters including a first filter 41 disposed on the most upstream side, and a second filter 42 disposed downstream relative to the first filter 41 and having filter performance higher than that of the first filter 41. The term "filtration performance" as used herein refers to filter properties represented by the ratio (β value) of foreign substances (the amount of contamination particles) before filtration to that after filtration as measured in compliance with JIS B8356-8 (filter performance test for filter elements). Filters with high β value have high filtration performance.

The filter section 40 is disposed in the filter chamber 33 and extends in a direction intersecting with the horizontal direction. In the present embodiment, the filter section 40 is disposed in the vertical direction. Further, the filter section 40 may also be inclined relative to the horizontal direction, and the first filter 41 may be disposed on the upper side in the gravity direction relative to the second filter 42. In this case, an air bubble attached on the first filter 41 can be efficiently released upward in the gravity direction relative to the upstream filter chamber 34. Further, the filter chamber 33 may not be necessarily provided, and the filter section 40 may be provided at an optional position in the first flow path 31 through which ink flows in the horizontal direction.

In the present embodiment, the filter chamber 33 has a groove-shaped recess 37 on an inner peripheral surface such that the filter section 40 is supported when an outer peripheral edge of the filter section 40 is fitted in the recess 37. An elastic member 43 along with the outer peripheral edge of the filter section 40 is fitted in the recess 37. In the present embodiment, a rubber O-ring is used as an elastic member 43. Further, in the present embodiment, the upstream filter chamber 34 and the downstream filter chamber 35 are separable, and the upstream filter chamber 34 and the downstream filter chamber 35 each have a groove formed on the respective interfaces. A groove formed on the upstream filter chamber 34 and a groove formed on the downstream filter chamber 35 are combined with each other to form the recess 37. A downstream surface of the outer peripheral edge of the filter section 40 is supported by the elastic member 43, and an upstream surface is supported by the recess 37. Further, a downstream surface of the outer peripheral edge of the filter section 40 may be supported by the recess 37, and an upstream surface may be supported by the elastic member 43. Alternatively, both surfaces of the outer peripheral edge of the filter section 40 may be supported by the elastic member 43. Moreover, the elastic member 43 may not be fitted in the recess 37, and both surfaces of the outer peripheral edge of the filter section 40 may be supported by the recess 37. Two projections may also be formed on the inner peripheral surface of the filter chamber 33 such that a space between the two projections may be the recess 37. The upstream filter chamber 34 and the downstream filter chamber 35 need not be separable.

In the present embodiment, the filter section 40 is formed of two filters, and the first filter 41 and the second filter 42 are closely in contact with each other. Further, the filter section 40 may also be formed of three or more filters. In this case, another filter may be interposed between the first filter 41 and the second filter 42, or alternatively, the first filter 41, the second filter 42, and another filter may be arrayed from the upstream side. Although these filters are preferably in close contact with each other, a gap may be formed between these filters. Providing these filters in close contact with each other facilitates fixation of the filter section 40, and also reduces the gap to thereby reduce the number of air bubbles trapped between filters. Further, in order to reduce displacement of filters, the filters may also be partially welded or adhered to each other to ensure close contact.

In the present embodiment, the first filter 41 and the second filter 42 are mesh-type filters made of stainless steel, having filter openings regularly arranged. A filter used for the first filter 41 has a wire diameter larger than the second filter 42 and the number of openings smaller than the second filter 42. That is, the first filter 41 is a filter with a coarser mesh and the second filter 42 is a filter with a finer mesh. Further, the filter opening pitch of the first filter 41 is different from multiples of the filter opening pitch of the second filter 42. The opening pitch of the first filter 41 is several hundred micrometers, and the opening pitch of the second filter 42 is several dozen micrometers. For the first filter 41 and the second filter 42, filters with approximately the same wire diameter may also be used. Further, the first filter 41 and the second filter 42 need not necessarily be made of a stainless steel, and may be made of a metal other than stainless steel, resin, glass or the like. Further, the first filter 41 and the second filter 42 need not necessarily be a mesh-type, and may be a type in which multiple pores formed by punching, etching, or the like are regularly arranged. When made of metal, the first filter 41 and the second filter 42 can be heat-processed while being in press-contact with each other to facilitate formation of the filter section 40 in which a plurality of filters are closely laminated.

The first filter 41 may have regularly arranged filter openings, while the second filter 42 may have irregularly arranged filter openings. Examples of such a second filter 42 include a non-woven cloth such as a metal fiber, having irregularly arranged filter openings. Alternatively, both the first filter 41 and the second filter 42 may have irregularly arranged filter openings. Examples of the first filter 41 and the second filter 42 include a non-woven cloth. In this case, the openings of the respective filters may tend to be misaligned from each other. Further, use of non-woven filters ensures the filters to be more closely attached to each other. Different types of filters may also be used to reduce passage of soft substances such as solid content of ink. Further, when a mesh-type filter made of metal is used as the first filter 41 and a filter made of metal fiber is used as the second filter 42, the filters can be heat-processed while being in press-contact with each other to thereby facilitate formation of the filter section 40 in which a plurality of filters are closely laminated and further reduce passage of soft substances such as solid content of ink.

The first filter 41 may be plated with Teflon (registered trademark) or electroless nickel to thereby ensure liquid repellency higher than the second filter 42. The "liquid repellency" refers to properties that causes large contact angle between solid (filter) and liquid (ink), and thus less wettability.

As shown in Fig. 2, the liquid level in the upstream filter chamber 34 varies due to various factors. As an example of the case where the liquid level in the upstream filter chamber 34 increases, the liquid level is raised as the liquid ejecting apparatus 5 is filled with ink. The liquid level is raised as air is released to the outside via the gas permeable film 50 provided on the ceiling of the upstream filter chamber 34. When degassed ink is used as the ink, the liquid level is raised as air in the upstream filter chamber 34 dissolves in the degassed ink. As an example of the case where the liquid level in the upstream filter chamber 34 decreases, the liquid level is lowered as air bubbles which have flowed from the upstream side are captured by the filter section 40 and accumulated in the upstream filter chamber 34. The liquid level is lowered as ink is consumed by performing printing using the liquid ejecting apparatus 5. Furthermore, when the liquid ejecting apparatus 5 is on-carriage type, the liquid level in the upstream filter chamber 34 varies due to driving of the carriage.

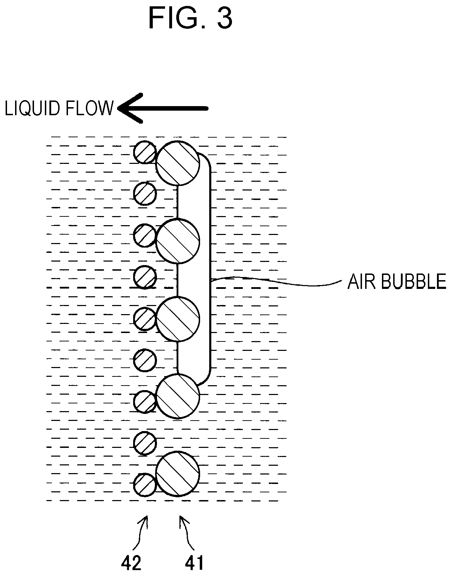

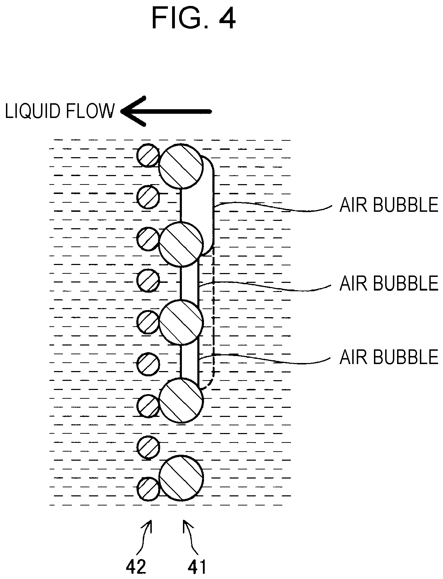

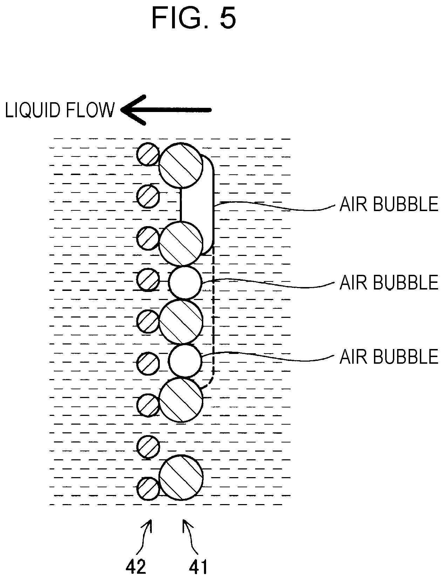

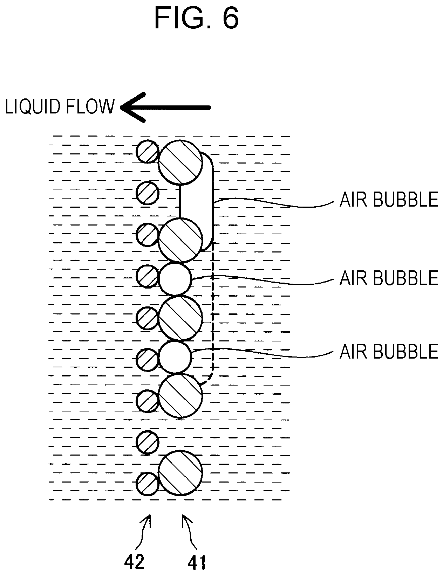

Figs. 3 to 6 are explanatory views illustrating behavior of air bubbles captured by the filter section 40. The upper side in Figs. 3 and 6 is the upper side in the gravity direction. As shown in Fig. 3, a large air bubble is attached on the upstream side on the first filter 41 due to the facts that air bubbles which have flowed from the upstream side are trapped by the filter section 40 and accumulated, or an air bubble is formed on the surface of the filter exposed above the liquid level when the liquid level in the upstream filter chamber 34 is lowered. Since a meniscus is formed in the openings of the first filter 41, part of the attached air bubble penetrates in the openings of the first filter 41. As shown in Fig. 4, as the liquid level in the upstream filter chamber 34 is raised, most of air bubbles attached on the upstream surface of the first filter 41 are displaced upward in the gravity direction in the upstream filter chamber 34. The solid line indicates the positions of air bubbles after they are displaced, and the dotted line indicates the positions of air bubbles before they are displaced. As shown in Fig. 5, part of air bubbles penetrated in the first filter 41 may remain as small air bubbles in the openings of the first filter 41 when the liquid level in the upstream filter chamber 34 is raised. The size of these air bubbles is approximately the same as that of the openings of the first filter 41. If the filter section 40 is formed only by the first filter 41, the air bubble shrinks, for example, by increased pressure of ink and passes through the first filter 41. That is, even if the openings of the first filter 41 are small in size, a meniscus is formed in the openings of the first filter 41. Accordingly, after the liquid level in the upstream filter chamber 34 is raised, air bubbles are likely to remain in the openings of the first filter 41 and flow downstream. However, according to the filter section 40 of the present embodiment, the second filter 42 having openings finer than the first filter 41 is disposed downstream relative to the first filter 41. Accordingly, as shown in Fig. 6, small air bubbles are trapped by the second filter 42. That is, since a meniscus is formed in the openings of the first filter 41, which are larger than those of the second filter 42, air bubbles remaining in the openings of the first filter 41 are larger in size than the openings of the second filter 42. Accordingly, the second filter 42 reduces passage of air bubbles. Then, small air bubbles remain in the openings of the first filter 41, or are released to the outside of the upstream filter chamber 34 via the gas permeable film 50. Further, when ink is degassed ink, air bubbles may dissolve in ink and disappear.

According to the flow path member 30 of the present embodiment described above, even if small air bubbles are generated in the openings of the first filter 41, the air bubbles are limited in size and not allowed to pass through the second filter 42. Accordingly, the air bubbles are trapped by the second filter 42 disposed downstream relative to the first filter 41. Accordingly, passage of air bubbles through the filter section 40 can be reduced.

Further, in the present embodiment, the first filter 41 and the second filter 42 are each formed of filters having regularly arranged filter openings. Accordingly, filtration performance of the first filter 41 and the second filter 42 can be easily adjusted.

Further, in the present embodiment, the opening pitch of the first filter 41 is not a multiple of the opening pitch of the second filter 42. Accordingly, the openings of the respective filters can be misaligned from each other and passage of air bubbles through the filter section 40 can be further reduced.

Further, in the present embodiment, the first filter 41 and the second filter 42 are closely in contact. Accordingly, gaps between filters also serve as filter openings to further reduce passage of air bubbles through the filter section 40.

Further, in the present embodiment, the first filter 41 having coarse meshes has liquid repellency higher than the second filter 42 having fine meshes. Accordingly, compared with the case where the second filter 42 has liquid repellency higher than the first filter 41, the filter section 40 can have reduced flow path resistance and can reduce formation of meniscus that may cause occurrence of small air bubbles in the openings of the second filter 42.

Further, in the present embodiment, the opening 38 is provided in the upstream filter chamber 34 on the upper side in the gravity direction, and the gas permeable film 50 is provided in the opening 38. Accordingly, air bubbles captured by the filter section 40 can be released to the outside of the upstream filter chamber 34 via the gas permeable film 50.

Further, in the present embodiment, the filter chamber 33 has a groove-shaped recess 37 on the inner peripheral surface such that the filter section 40 is supported when the outer peripheral edge of the filter section 40 is fitted in the recess 37. Accordingly, the filter section 40 can be fixed in the filter chamber 33 while ensuring an effective cross-section of the filter. In addition, since the filter section 40 is not adhered on the inner peripheral surface of the filter chamber 33 by adhesion or welding, the flow path member 30 can be easily assembled.

Moreover, in the present embodiment, the elastic member 43 along with the outer peripheral edge of the filter section 40 is fitted in the recess 37, and the surface of the outer peripheral edge of the filter section 40 on the downstream side is supported by the elastic member 43. Accordingly, sealing ability of the outer peripheral edge of the filter section 40 can be improved. Further, since the surface of the outer peripheral edge of the first filter 41 having a larger wire diameter and higher rigidity than the second filter 42 is supported by the recess 37, higher durability can be ensured than the case where the surface of the outer peripheral edge of the second filter is supported by the recess 37.

Further, in the case where pressurization is turned on or off from the upstream side relative to the filter section 40, for example, in initial filling of the liquid ejecting head 20 with ink or in maintenance operation for the liquid ejecting head 20 in which liquid is discharged from the nozzle 25 by pressurization, air bubbles remaining in the openings of the filter are likely to shrink, expand, or flow by the pressurization being turned on or off. This may cause passage of the air bubbles through a filter if the filter is single-layered. However, since the filter section 40 of the present embodiment is a multi-layered filter having the first filter 41 and the second filter 42, passage of air bubbles can be effectively reduced even if pressurization is turned on or off from the upstream side relative to the filter section 40.

Moreover, in the case where the opening 38 for releasing air bubbles is not provided in the upstream filter chamber 34, air is accumulated in the upper part of the upstream filter chamber 34, for example, in initial filling of ink, and the liquid level is gradually raised during degassing after initial filling or ejection operation. Accordingly, as the liquid level is raised, air bubbles are likely to remain in the openings of the filter. This may cause passage of the air bubbles through a filter if the filter is single-layered. However, since the filter section 40 of the present embodiment is a multi-layered filter having the first filter 41 and the second filter 42, passage of air bubbles can be effectively reduced even if pressurization is turned on or off from the upstream side relative to the filter section 40.

The invention is not limited to liquid ejecting apparatuses that eject ink, and may be applied to other liquid ejecting apparatuses that eject liquid other than ink.

The invention is not limited to the above embodiments, and can be embodied as various configurations without departing from the scope of the invention consistent with the claims. For example, the technical features in the embodiments corresponding to the technical features in the aspects described in the summary of the invention may be replaced or combined as appropriate in order to solve part or all the above problems or achieve part or all the above effects. Further, the technical features may be eliminated as appropriate unless they are described as being essential in the description.

## Claims

1. A flow path member (30) comprising:
a first flow path (31) for distributing liquid; and
a filter section (40) disposed in the first flow path to extend intersecting with a horizontal direction, the filter section being provided for capturing an air bubble, wherein
the filter section has a plurality of filters (41, 42) including a first filter (41) disposed on a most upstream side, and a second filter (42) disposed on a downstream side relative to the first filter and having filtration performance higher than the first filter.

2. The flow path member according to Claim 1, wherein the first filter has regularly arranged filter openings, and the second filter has irregularly arranged filter openings.

3. The flow path member according to Claim 1, wherein the first filter and the second filter each have regularly arranged filter openings.

4. The flow path member according to Claim 3, wherein a opening pitch of the first filter is different from multiples of a opening pitch of the second filter.

5. The flow path member according to any one of the preceding claims, wherein the first filter has liquid repellency higher than the second filter.

6. The flow path member according to any one of the preceding claims, wherein
the first flow path has a groove-shaped recess (37) on an inner peripheral surface of the first flow path, and
the filter section is supported when an outer peripheral edge of the filter section is fitted in the recess.

7. The flow path member according to Claim 6, wherein an elastic member (40) along with the outer peripheral edge is fitted in the recess.

8. The flow path member according to any one of the preceding claims, wherein the plurality of filters are in close contact with each other.

9. The flow path member according to any one of the preceding claims, wherein
the filter section is inclined relative to the horizontal direction, and
the first filter is disposed on an upper side in the gravity direction relative to the second filter.

10. The flow path member according to any one of the preceding claims, wherein
the first flow path has an opening (38) disposed on an upper side in the gravity direction and on an upstream side relative to the filter section, and
the opening is provided with a gas permeable film (50).

11. A liquid ejecting apparatus (5) comprising:
a nozzle (25) for ejecting liquid supplied from a liquid supply source (10);
a first flow path (31) for distributing the liquid supplied from the liquid supply source to the nozzle; and
a filter section (40) disposed in the first flow path to extend intersecting with a horizontal direction, the filter section being provided for capturing an air bubble, wherein
the filter section has a plurality of filters including a first filter (41) disposed on a most upstream side, and a second filter (42) disposed on a downstream side relative to the first filter and having filtration performance higher than the first filter.

12. The liquid ejecting apparatus according to Claim 11, further comprising:
a pressurization unit (15) disposed in the first flow path on an upstream side relative to the filter section, the pressurization unit being provided for pressurizing and supplying the liquid into the first flow path.
